# EUROPÄISCHE PATENTSCHRIFT

(11) **EP 3 001 087 B1**
(45) Veröffentlichungstag und Bekanntmachung des Hinweises auf die Patenterteilung: **08.11.2017**
(21) Anmeldenummer: 14186494.2
(22) Anmeldetag: 26.09.2014
(51) Int. Cl.: F16L 47/03, F16L 47/30, F16L 47/34

(54) **Rohrschelle**
Pipe clamp
Collier de tuyeau

(43) Veröffentlichungstag der Anmeldung: 30.03.2016
(73) Patentinhaber: Georg Fischer Wavin AG, 8201 Schaffhausen (CH)
(72) Erfinder: Hunnekuhl, Jörg, 79798 Jestetten (DE); Breyer, Markus, 78315 Radolfzell (DE); Rösch, Jürgen, 79853 Lenzkirch (DE)
(74) Vertreter: Fenner, Seraina

(56) Entgegenhaltungen:
- EP-A1- 0 754 900
- DE-A1- 2 528 758
- US-B1- 6 773 036
- US-B2- 7 219 684

## Beschreibung

Die Erfindung betrifft eine Rohrschelle insbesondere eine Elektroschweissrohrschelle die um eine Kunststoffrohrleitung montierbar ist, enthaltend einen Sattelkörper mit einem Anschlussstutzen für eine Anbohreinheit oder zum Anschliessen einer abgehenden Rohrleitung, Bänder zum Umschlingen der Rohrleitung, Bandenden, wobei die Bandenden Rastmittel aufweisen, mindestens einen Rastbereich, wobei zur Befestigung der Rohrschelle an der Kunststoffrohrleitung die Rastmittel der Bandeneden im Rastbereich eingerastet sind.

Derartige Rohrschellen sind aus dem Stand der Technik bekannt. Sie können als Anbohrschellen eingesetzt werden und an Gas- oder Wasserrohrleitungen befestigt werden bei denen sie mittels Anbohrarmatur die Wandung durchbohren, wobei der Anschlussstutzen für die Aufnahme einer Anbohreinheit dienen kann. Zudem können solche Rohrschellen aber auch zum blossen Anschliessen von Abzweigrohren oder anderen Armaturen eingesetzt werden wie auch eine kombinierte Ausführung einer Anbohrarmatur, welche sich nach dem Anbohren zum Anschliessen eines Abzweigrohres bzw. einer weiteren Armatur eignet.

Die US 7 219 684 B2 offenbart einen Anschlusssattel, welcher durch ein integriertes Band um das Rohr befestigt wird. Das Band rastet an einer Schliesseinheit ein wodurch die Rohrschelle am Rohr befestigt ist.

Die US 6 767 033 B2 offenbart ebenfalls einen Anschlusssattel zum Anschliessen einer Abzweigleitung. Der Anschlusssattel weist ein integriertes Band auf, welches am Ende verstärkt ist und Rastzähne aufweist. Das Band wird auch bei diesem Anschlusssattel in einer Verriegelung aufgenommen, wobei die Verriegelung sowie das Band Rippen aufweist um einen Druck auf das Band auszuüben, damit es sich nicht aus der Verriegelung löst.

Die oben erwähnten Anschlusssättel haben den Nachteil, dass sie sich nicht autonom nachspannen. Das heisst, wenn sich die Spannung im Band verringert, sitzt der Anschlusssattel nicht mehr fest am Rohr oder es muss manuell nachgespannt werden.

Die EP 1 191 274 B1 offenbart ebenfalls eine Rohrschelle, wobei diese aus einem Ober- und Unterteil gebildet ist und mittels Scharnier auf der einen Seite verbunden ist. Auf der gegenüberliegenden Seite wird die Rohrschelle mittels Schrauben zusammengespannt und am Rohr fixiert.
Nachteilig ist bei dieser Rohrschelle, dass sie ebenfalls manuell nachgespannt werden muss und dass sie zur Montage Werkzeug benötigt wie auch zum manuellen Nachspannen.

Die US 6,773,036 B1 offenbart eine spannbare Rohrschelle.

Es ist Aufgabe der Erfindung eine Rohrschelle vorzuschlagen, die zur Befestigung an den Rohrleitungen kein Werkzeug benötigt sowie dass sie auch konstant fest an der Rohrleitung fixiert ist, ohne dass eine manuelle Nachstellung erforderlich ist.
Diese Aufgabe wird erfindungsgemäss dadurch gelöst, dass der Rastbereich ein Spannelement aufweist, wobei das Spannelement schiebbar in einer Spannelementnut angeordnet ist.
Der Sattelkörper der erfindungsgemässen Rohrschelle weist auf mindestens einer Seite einen Rastbereich auf, der eine Spannelementnut beinhaltet. Diese Spannelementnut erstreckt sich vorzugsweise über die Länge des Sattelkörpers somit parallel zur Mittelachse der Rohrschelle bzw. der Kunststoffrohrleitung an der die Rohrschelle montiert ist. Die Spannelementnut ist derart ausgebildet, dass das Spannelement darin anzuordnen ist. Das Spannelement ist formschlüssig in der Spannelementnut angeordnet und ist in etwa tangential zum Rohrleitungsumfang in der Spannelementnut verschiebbar.
Die Bandenden werden zur Befestigung der Rohrschelle an der Rohrleitung im Spannelement eingerastet. Das erfolgt indem die Bandenden durch eine Öffnung bzw. Aussparung, wobei auch mehrere Öffnungen denkbar sind, im Boden der Spannelementnut hindurch geschoben und im Spannelement, welches schiebbar in der Spannelementnut angeordnet ist, eingerastet werden. Dadurch, dass das Spannelement schiebbar in der Spannelementnut angeordnet ist, kann das Band noch nachgestellt werden bzw. das Spannelement spannt das Band selbstständig und kontinuierlich nach indem eine Kraft auf das Spannelement wirkt und dadurch das Band bzw. die Bänder konstant gespannt sind. Dies hat den Vorteil, dass sich aufgrund von bspw. einer Bänderstreckung oder einer sonstigen Veränderung der Rohrschelle, die vorzugsweises aus Kunststoff hergestellt ist, kein manuelles Nachspannen erforderlich ist oder sich die Rohrschelle auch nicht löst, da sie sich autonom durch das schiebbare Spannelement und die darauf konstant einwirkende Kraft selbst nachspannt. Auch bei Elektroschweissrohrschellen ist das ein grosser Vorteil, da sich beim Schweissvorgang ein Schweissdruck aufbaut und dadurch eine Ausdehnung des Sattels erkennbar ist. So können diese geometrischen und durch Druck entstandenen Unterschiede mittels des Spannelements ausgeglichen werden.

Die Kraft, welche im Rastbereich auf das Spannelement ausgeübt wird, wird vorzugsweise durch mindestens ein Federelement erwirkt, wobei auch mehrere Federelemente denkbar sind, sowie die Ausführungsform mit zwei Federelementen zu bevorzugen ist. Vorzugsweise sind zwei Druckfedern in der Spannelementnut nebeneinander angeordnet, welche auf das Spannelement wirken und dieses hochdrücken. Das wiederum verursacht einen Zug auf die Bänder, die in das Spannelement eingerastet sind und dadurch konstant angezogen sind.

Vorzugsweise sind die Federelemente durch Führungen geführt. Der Einfachheit halber weist die Spannelementnut zwei darin fest angeordnete Führungsstifte auf und im Spannelement zwei entsprechende Führungsbohrungen in denen die Druckfedern angeordnet sind und die Stifte ebenfalls als innere Führung dienen.

Damit das Spannelement nicht ungewollt aus der Spannelementnut herausspringt, falls die Bänder noch nicht eingerastet sind, weist das Spannelement eine Sicherung auf, die vorzugsweise als eine Art Stift bzw. Verlängerung am Spannelement angeordnet ist und durch eine durchgehende Aussparung bzw. Öffnung im Boden der Spannelementnut hindurch tritt und mittels dem Stoppelement am Stift bzw. der Verlängerung, welches vorzugsweise als Widerhaken ausgebildet ist, das herausspringen verunmöglicht wird und das Spannelement gestoppt wird.

Damit die Rohrschelle bzw. das Nachspannen des Spannelements erst aktiviert wird wenn die Rohrschelle montiert ist, da die Bänder im Spannelement eingerastet sein müssen, weist die Rohrschelle einen Sicherungsstift auf der durch die zuvor erwähnte Sicherung des Spannelements hindurch gesteckt ist, wobei die Sicherung des Spannelements dazu eine entsprechende Bohrung aufweist und der Sicherungsstift durch das Anstehen an dem Rastbereich den Spannvorgang der Spannelemente unterbindet. Wird der Sicherungsstift entfernt. Wirkt die Kraft der Federelemente auf das Spannelement, drückt dieses hoch und strafft dadurch die Bänder, welche im Spannelement eingerastet sind.

Das Spannelement weist Entriegelungslaschen auf. Diese dienen dazu das Bandende, welches zur Montage am Spannelement eingerastet wird wieder zu entrasten um die Rohrschelle vom Rohr zu entfernen, falls nötig und falls nicht mit dem Rohr verschweisst.

An den Entriegelungslaschen sind ebenfalls Rastmittel angeordnet, die vorzugsweise als Rastzähne ausgebildet sind. Zur Befestigung des Bandes bzw. der Bandenden rasten die Rastelemente der Bandenden und die des Spannelements bzw. die an den Entriegelungslaschen ineinander.

Die Bandenden sind derart im Spannelement geführt, dass sie in den Rastelementen der Entriegelungslaschen einhaken müssen und ein lösen nur möglich ist, wenn die Entriegelungslaschen betätigt werden, dass die Rastelemente sich voneinander lösen können.

Eine Bevorzugte Ausgestaltung besteht darin dass die Rohrschelle einen Sattelkörper und Bänder aufweist die einteilig ausgebildet sind. Das heisst, dass die Bänder sich vorzugsweise von einer Seite des Sattelkörpers hin erstrecken bzw. direkt angeformt sind, bspw. durch die Herstellung mittels Spritzgiessen und dann im Rastbereich auf der anderen Seite des Sattelkörpers eingerastet werden können.

Eine alternative Ausführungsform einer erfindungsgemässen Vorrichtung weist auf beiden Seiten des Sattelkörpers einen parallel zur Mittelachse verlaufenden Rastbereich auf in denen jeweils ein Spannelement in der entsprechenden Spannelementnut angeordnet ist. Bei einer solchen Ausführungsform der erfindungsgemässen Vorrichtung sind die Bänder nicht direkt am Sattelkörper angeformt sondern sind separat ausgebildete Teile, sei es ein einzelnes Band oder mehere einzelne Bänder die mit einem Quersteg verbunden sein können oder nicht. Mittels der beiden Rastbereiche in denen die Bänder eingespannt werden wird die Rohrschelle an der Rohrleitung befestigt. Der Spannvorgang erfolgt nun beidseitig. Speziell bei grösseren Dimensionen ist diese Variante zu bevorzugen.

Vorzugsweise weist die Rohrschelle mehrere Bänder auf, die parallel verlaufen, wobei auch nur ein Band vorstellbar wäre.
Bei mehreren Bändern, die sich parallel erstrecken, ist es vorteilhaft, wenn diese mittels Quersteg miteinander verbunden sind. Dies macht es auch möglich, dass bspw. drei Bänder vom Sattelkörper abgehen und am Ende mittels Quersteg verbunden sind und dann in zwei Bandenden übergehen.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine dreidimensionale Darstellung einer erfindungsgemässen Rohrschelle mit einem Rastbereich ,
- Fig. 2: einen Teilschnitt einer erfindungsgemässen Rohrschelle im Rastbereich,
- Fig. 3: einer Explosionsdarstellung einer erfindungsgemässen Rohrschelle,
- Fig. 4: einen Teilschnitt einer erfindungsgemässen Rohrschelle durch die Federelemente und
- Fig. 5: eine dreidimensionale Darstellung einer erfindungsgemässen Rohrschelle mit zwei Rastbereichen.

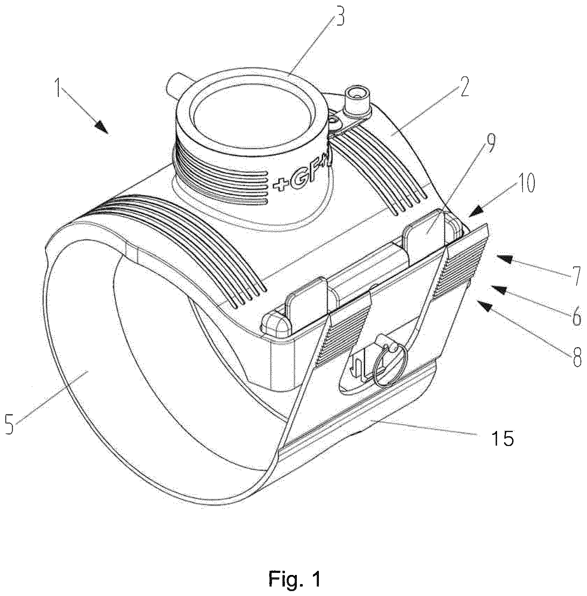

Fig. 1 zeigt eine erfindungsgemässe Rohrschelle 1, wobei die Bänder 5 noch nicht im Rastbereich 7 zur Montage an einer Rohrleitung verrastet sind. Die in Fig. 1 dargestellte Ausführungsform der erfindungsgemässen Rohrschelle 1 zeigt einen Rastbereich 7 der auf einer Seite des Sattelkörpers 2 angeordnet ist und die Bänder 5 die am Sattelkörper 2 angeformt sind, so dass Sattelkörper 2 und die Bänder 5 einteilig sind. Vorzugsweise ist die erfindungsgemässe Rohrschelle 1 eine Elektroschweissrohrschelle, wie auch in den Ausführungsbeispielen aufgezeigt, wobei aber die erfindungsgemässe Rohrschelle 1 auch bei Rohrschellen angewandt werden kann, die nicht als Elektroschweissrohrschelle ausgebildet sind. Die vorliegende Rohrschelle 1 weist einen Sattelkörper 2 auf, an dem ein Anschlussstutzen 3 zum anschliessen bspw. einer abgehenden Rohrleitung angeordnet ist. Die Rohrschelle 1 weist Bänder 5 zur Umschlingung einer Kunststoffrohrleitung (nicht dargestellt) auf. Vorzugsweise weist die Rohrschelle 1 mehrere Bänder 5 auf, welche parallel verlaufen. Im Ausführungsbeispiel sind zwei parallel verlaufende Bänder 5 angeordnet, welche einteilig mit dem Sattelkörper 2 ausgebildet sind. Zudem sind sie über einen Quersteg 15 miteinander verbunden und erstecken sich dann weiter in zwei Bandenden 8, welche zur Befestigung der Rohrschelle 1 dienen bzw. zur Befestigung im Spannelement 9. Durchaus können auch anders ausgebildete Bänder eingesetzt werden die beispielsweise keinen Quersteg 15 aufweisen.

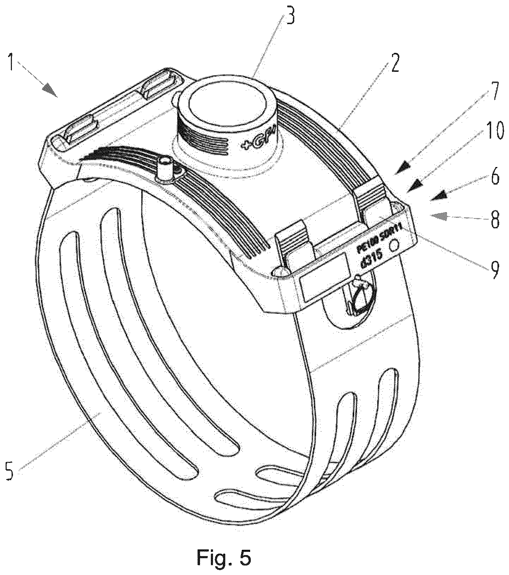

Vorzugsweise sind der Sattelkörper 2, die Bänder 5, der Quersteg 15 und die Bandenden 8 einteilig ausgebildet, das heisst, dass bspw. durch Spritzgiessen eine einteilige Herstellung erfolgen kann und dadurch geringe Herstellkosten entstehen. Selbstverständlich ist auch eine mehrteilige Ausführung denkbar, wie auch eine andere Ausgestaltung der Bänder 5, des Querstegs 15 und der Bandenden 8 vorstellbar ist. Bei einer mehrteiligen Variante wie sie in Fig. 5 dargestellt ist weist der Sattelkörper 2 auf beiden Seiten einen Rastbereich 7 auf die parallel zur Mittelachse verlaufen und sich vorzugsweise über die Länge des Sattelkörpers 2 erstrecken. Bei dieser Ausführungsform sind die Bänder 5 als separate Teile ausgebildet und nicht direkt am Sattelkörper 5 angeformt. Die Bänder 5, ob mit oder ohne Quersteg 15 der sie verbindet, werden mit ihren Bandenden 8 und ihren Rastmitteln 6 in den Spannelementen 9 in den Rastbereichen 7 eingerastet. Beim lösen der Sicherungsstifte 13 werden die Spannelement 9 jeweils auf beiden Seiten aktiviert und es findet eine beidseitige Spannung der Bänder 5 statt.

Die Bandenden 8 weisen Rastmittel 6 auf, welche zum Einrasten der Bänder 5 im Rastbereich 7 dienen und dadurch die Rohrschelle 1 am Kunststoffrohr fixieren. Der Rastbereich 7 ist in der in Fig. 1 abgebildeten Ausführungsform auf einer Seite des Sattelkörpers 2 angeordnet und verläuft entlang der Mittelachse der Rohrschelle 1 bzw. der Kunststoffrohrleitung, auf welche die Rohrschelle 1 montiert wird.

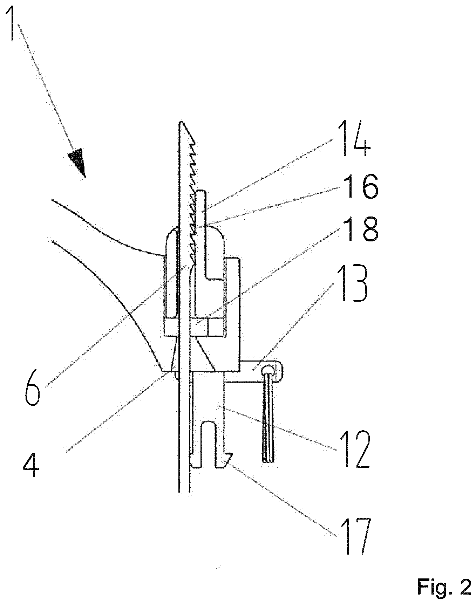

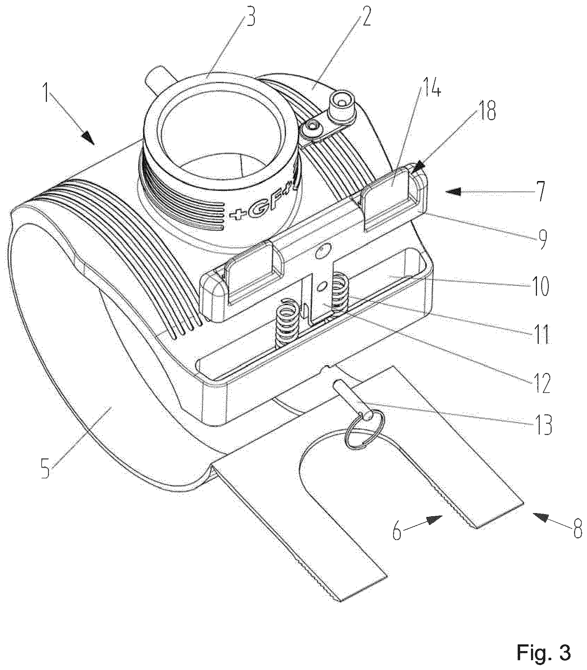

Der Rastbereich 7 weist eine Spannelementnut 10 auf in der das Spannelement 9 verschiebbar angeordnet ist. Das heisst, das Spannelement 9 lässt sich nicht entlang der Mittelachse der Kunststoffrohrleitung verschieben aber in etwa tangential zum Kunststoffrohrleitungsumfang, so dass sich das Spannelement 9 aus der Spannelementnut 10 schieben lässt, was in Fig. 3 erkennbar ist.
Das Spannelement 9 erstreckt sich über die ganze Länge der Spannelementnut 10 bzw. über die Länge der Rohrschelle 1. Unterhalb des Spannelements 9 bzw. am Boden der Spannelementnut 10 sind Federelemente 11 vorzugsweise Druckfedern angeordnet, die das Spannelement 9 hochdrücken. Die Bandenden 8 werden dann durch den Boden der Spannelementnut 10, welcher Aussparungen 4 aufweist, hindurchgeschoben und im Spannelement 9 mittels den Rastmitteln 6 an den Bandenden 8 eingerastet. Durch die Federelemente 11, welche das Spannelement 9 hochdrücken werden die Bänder 5 gespannt, wenn der Sicherungsstift 13 gezogen ist und die Rohrschelle 1 dadurch aktiviert wird. Das bedeutet, dass die Rohrschelle 1 um das Kunststoffrohr gelegt wird, die Bandenden 8 in das Spanelement 9 eingerastet werden und dann der Sicherungsstift 13, der in der Sicherung 12 des Spannelements 9 angeordnet ist, gezogen wird und dadurch die Bänder 5 noch mehr gespannt werden. Zudem hat die erfindungsgemässe Rohrschelle 1 den Vorteil, dass sie sich selbst konstant gespannt hält und auch nachspannt. Dies ist auch vorteilhaft bei einer Elektroschweissrohrschelle bei der während der Schweissung ein Schweissdruck aufgebaut wird und eine Ausdehnung des Sattels 2 erkennbar ist, wodurch die geometrischen und durch Druck entstehenden Unterschiede durch das Spannelement 9 ausgeglichen werden und so das Spannelement 9 die Spannung aufrecht hält indem die Bänder 5 nachgezogen werden.
Damit das Spannelement 9 nicht ungewollt aus der Spannelementnut 10 springt bspw. bei versehentlichem ziehen des Sicherungsstifts 13, weist das Spannelement 9 eine Sicherung 12 auf, die dies verhindert. Die Sicherung 12 ist in dieser Ausführungsform als eine Art Stift ausgebildet der am Spannelement 9 direkt angeordnet ist. Die Sicherung 12 weist Stoppelemente 17 auf, die hier als Widerhaken am unteren Bereich ausgebildet sind und am Rande der Öffnung bzw. Aussparung 4 im Boden der Spannelementnut 10 anstehen wenn sich das Spannelement 9 zu weit hebt, da die Öffnung so gross ist, dass die Sicherung 12 nur durchtreten kann wenn die Stoppelemente 17 zusammengedrückt werden, dies ist in Fig. 2 erkennbar. Des Weiteren ist in Fig. 2 gut zu erkennen, wie die Rastmittel 6 der Bandenden 8 in die Rastmittel 16 am Spannelement 9 bzw. an den Entriegelungslaschen 14 eingreifen. Vorzugsweise sind die Rastmittel 6, 16 als Zähne ausgebildet und vorzugsweise ist mehr als nur ein Zahn an den Entriegelungslaschen 14 angeordnet. In Fig. 2 ist der Vorgang der Verriegelung gut erkennbar. Durch die Nuten 18 am Spannelement 9 werden die Bandenden 8 hindurchgeschoben und führen zugleich die Bandenden 8.
Eine Entriegelung ist nur möglich, wenn die Entriegelungslaschen 14 nach hinten gedrückt werden damit die Rastmittel 6 der Bandenden 8 nicht mehr mit den Rastmitteln 16 der Entriegelungslaschen 14 im Eingriff sind.

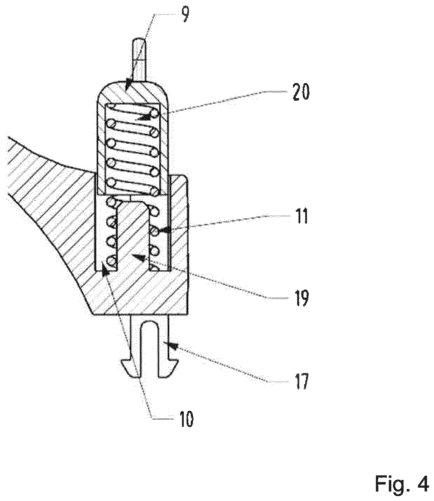

Als weiterer Vorteil hat sich gezeigt, dass wenn die Federelemente 1 geführt sind, vorzugsweise wie in der gezeigten Ausführungsform auf fest in der Spannelementnut 10 angeordneten Führungsstiften 19 und Führungsbohrungen 20 im Spannelement 9 in denen die Federelemente 11 aufgenommen und geführt werden, was in Fig. 4 dargestellt ist.

Fig. 3 zeigt die erfindungsgemässe Rohrschelle 11 in einer Explosionsansicht. Dadurch ist gut erkennbar, in welche Richtung sich das Spannelement 9 verschieben lässt bzw. in welche Richtung es sich verschiebt wenn der Sicherungsstift 13 gezogen ist und die Rohrschelle 1 bzw. der Rastbereich 7 aktiviert ist.

### Bezugszeichenliste

- 1: Rohrschelle
- 2: Sattelkörper
- 3: Anschlussstutzen
- 4: Aussparung im Boden der Spannelementnut
- 5: Bänder
- 6: Rastmittel Bandenden
- 7: Rastbereich
- 8: Bandende
- 9: Spannelement
- 10: Spannelementnut
- 11: Federelement
- 12: Sicherung Spannelement
- 13: Sicherungsstift
- 14: Entriegelungslaschen
- 15: Quersteg
- 16: Rastmittel Entriegelungslaschen
- 17: Stoppelement Widerhaken
- 18: Nut im Spannelement
- 19: Führungsstift
- 20: Führungsbohrung

## Patentansprüche

1. Rohrschelle (1) insbesondere eine Elektroschweissrohrschelle die um eine Kunststoffrohrleitung montierbar ist, enthaltend:
- einen Sattelkörper (2) mit einem Anschlussstutzen (3) für eine Anbohreinheit oder zum Anschliessen einer abgehenden Rohrleitung,
- Bänder (5) zum Umschlingen der Rohrleitung, wobei die Bänder (5) Bandenden (8) aufweisen, wobei die Bandenden (8) Rastmittel (6) aufweisen,
- -mindestens einen Rastbereich (7), wobei zur Befestigung der Rohrschelle (1) an der Kunststoffrohrleitung (4) die Rastmittel (6) der Bandeneden (8) im Rastbereich (7) eingerastet sind, wobei der Rastbereich (7) ein Spannelement (9) aufweist, wobei das Spannelement (9) schiebbar in einer Spannelementnut (10) angeordnet ist.

2. Rohrschelle (1) nach Anspruch 1, **dadurch gekennzeichnet, dass** der Rastbereich (7) mindestens ein Federelement (11) aufweist, wobei das Federelement (11) eine Kraft auf das Spannelement (9) ausübt und dadurch die Bänder (5) konstant gespannt sind bzw. kontinuierlich nachgespannt werden.

3. Rohrschelle (1) nach einem der Ansprüche 1 oder 2, **dadurch gekennzeichnet, dass** das Spannelement (9) eine Sicherung (12) aufweist, wobei die Sicherung (12) das ungewollte herausspringen des Spannelements (9) aus der Spannelementnut (10) verhindert.

4. Rohrschelle (1) nach einem der Ansprüche 1 bis 3, **dadurch gekennzeichnet, dass** die Rohrschelle (1) einen Sicherungsstift (13) aufweist, wobei das Entfernen des Sicherungsstifts (13) die Kraft des Federelements (11) auf das Spannelement (9) auslöst.

5. Rohrschelle (1) nach einem der Ansprüche 1 bis 4, **dadurch gekennzeichnet, dass** das Spannelement (9) Entriegelungslaschen (14) aufweist.

6. Rohrschelle (1) nach einem der Ansprüche 1 bis 5, **dadurch gekennzeichnet, dass** der Sattelkörper (2) und die Bänder (5) einteilig ausgebildet sind.

7. Rohrschelle (1) nach einem der Ansprüche 1 bis 6, **dadurch gekennzeichnet, dass** die Rohrschelle (1) einen Rastbereich (7) aufweist der auf einer Seite des Sattelkörpers (2) angeordnet ist und parallel zur Mittelachse verläuft.

8. Rohrschelle (1) nach einem der Ansprüche 1 bis 5, **dadurch gekennzeichnet, dass** der Sattelkörper (2) zwei Rastbereich (7) aufweist die beidseitig des Sattelkörpers (2) angeordnet sind und parallel zur Mittelachses verlaufen.

9. Rohrschelle (1) nach einem der Ansprüche 1 bis 8, **dadurch gekennzeichnet, dass** die Bänder (5) untereinander mit einem Quersteg (15) verbunden sind.

10. Rohrschelle (1) nach einem der Ansprüche 1 bis 9, **dadurch gekennzeichnet, dass** die Entriegelungslaschen (14) Rastmittel (16) aufweisen.

## Claims

1. Pipe clamp (1), in particular an electric welding pipe clamp, which can be fitted around a plastics pipeline, containing:
- a saddle element (2) having a connecting piece (3) for a tapping unit or for the connection of an outgoing pipeline,
- straps (5) for wrapping around the pipeline, wherein the straps (5) have strap ends (8), wherein the strap ends (8) have latching means (6),
- at least one latching region (7), wherein, for the fastening of the pipe clamp (1) to the plastics pipeline (4), the latching means (6) of the strap ends (8) are latched in the latching region (7), wherein the latching region (7) has a tensioning element (9), wherein the tensioning element (9) is arranged slidably in a tensioning element groove (10).

2. Pipe clamp (1) according to Claim 1, **characterized in that** the latching region (7) has at least one spring element (11), wherein the spring element (11) exerts a force on the tensioning element (9) and the straps (5) are thereby constantly tensioned or continuously retensioned.

3. Pipe clamp (1) according to Claim 1 or 2, **characterized in that** the tensioning element (9) has a locking device (12), wherein the locking device (12) prevents the tensioning element (9) from inadvertently springing out of the tensioning element groove (10).

4. Pipe clamp (1) according to one of Claims 1 to 3, **characterized in that** the pipe clamp (1) has a locking pin (13), wherein the removal of the locking pin (13) releases the force of the spring element (11) onto the tensioning element (9).

5. Pipe clamp (1) according to one of Claims 1 to 4, **characterized in that** the tensioning element (9) has unlocking tongues (14).

6. Pipe clamp (1) according to one of Claims 1 to 5, **characterized in that** the saddle element (2) and the straps (5) are configured in one piece.

7. Pipe clamp (1) according to one of Claims 1 to 6, **characterized in that** the pipe clamp (1) has a latching region (7), which is arranged on one side of the saddle element (2) and runs parallel to the center axis.

8. Pipe clamp (1) according to one of Claims 1 to 5, **characterized in that** the saddle element (2) has two latching regions (7), which are arranged on both sides of the saddle element (2) and run parallel to the center axis.

9. Pipe clamp (1) according to one of Claims 1 to 8, **characterized in that** the straps (5) are mutually connected with a crosspiece (15).

10. Pipe clamp (1) according to one of Claims 1 to 9, **characterized in that** the unlocking tongues (14) have latching means (16).

## Revendications

1. Collier de serrage (1), notamment collier de serrage pour soudage électrique qui peut être monté autour d'une conduite en matière plastique, comprenant :
- un corps en collerette (2) pourvu d'un manchon de raccordement (3) pour une unité de pointage ou destiné à raccorder une conduite tubulaire partante,
- des bandes (5) servant au cerclage de la conduite tubulaire, les bandes (5) possédant des extrémités de bande (8), les extrémités de bande (8) possédant des moyens d'enclenchement (6),
- au moins une zone d'enclenchement (7), les moyens d'enclenchement (6) des extrémités de bande (8) étant enclenchés dans la zone d'enclenchement (7) en vue de la fixation du collier de serrage (1) sur la conduite tubulaire en matière plastique (4), la zone d'enclenchement (7) possédant un élément de serrage (9), l'élément de serrage (9) étant monté coulissant dans une rainure d'élément de serrage (10).

2. Collier de serrage (1) selon la revendication 1, **caractérisé en ce que** la zone d'enclenchement (7) possède au moins un élément ressort (11), l'élément ressort (11) exerçant une force sur l'élément de serrage (9) et, de ce fait, les bandes (5) étant constamment tendues ou continuellement retendues.

3. Collier de serrage (1) selon l'une des revendications 1 ou 2, **caractérisé en ce que** l'élément de serrage (9) possède un élément de sécurité (12), l'élément de sécurité (12) empêchant que l'élément de serrage (9) soit involontairement éjecté hors de la rainure d'élément de serrage (10).

4. Collier de serrage (1) selon l'une des revendications 1 à 3, **caractérisé en ce que** le collier de serrage (1) possède une goupille de sécurité (13), le retrait de la goupille de sécurité (13) libérant la force de l'élément ressort (11) sur l'élément de serrage (9).

5. Collier de serrage (1) selon l'une des revendications 1 à 4, **caractérisé en ce que** l'élément de serrage (9) possède des languettes de déverrouillage (14).

6. Collier de serrage (1) selon l'une des revendications 1 à 5, **caractérisé en ce que** le corps en collerette (2) et les bandes (5) sont réalisés d'un seul tenant.

7. Collier de serrage (1) selon l'une des revendications 1 à 6, **caractérisé en ce que** le collier de serrage (1) possède une zone d'enclenchement (7) qui est disposée d'un côté du corps en collerette (2) et s'étend parallèlement à l'axe central.

8. Collier de serrage (1) selon l'une des revendications 1 à 5, **caractérisé en ce que** le corps en collerette (2) possède deux zones d'enclenchement (7) qui sont disposées des deux côtés du corps en collerette (2) et qui s'étendent parallèlement à l'axe central.

9. Collier de serrage (1) selon l'une des revendications 1 à 8, **caractérisé en ce que** les bandes (5) sont reliées entre elles par un élément jointif transversal (15).

10. Collier de serrage (1) selon l'une des revendications 1 à 9, **caractérisé en ce que** les languettes de déverrouillage (14) possèdent des moyens d'enclenchement (16).
